# EUROPEAN PATENT APPLICATION

(11) **EP 0 977 102 A2**
(43) Date of publication of application: **02.02.2000**
(21) Application number: 99306097.9
(22) Date of filing: 30.07.1999
(51) Int. Cl.: G05D 16/06, G05D 16/16

(54) **Pressure control apparatus and method**

(30) Priority: 30.07.1998 GB 9816664
(71) Applicant: Wessex Electronics Consultants Limited, Salisbury, Wiltshire SP5 1NF (GB)
(72) Inventor: Sotoudeh, Abbas, Salisbury, Wiltshire SP5 1NF (GB)
(74) Representative: Waldren, Robin Michael

(57) **Abstract**

A pilot valve 10 having a control chamber 16 and pressure varying means in the control chamber 16, the pressure varying means comprising a stopper 24 which is biased to the upper end of the control chamber 16 by a spring 26. A hydraulic actuator 22 communicates with the control chamber 16, the actuator comprising a head portion 30 an and elongate stem portion 32. The stem portion 32 comprises a generally tubular threaded adaptor 34 which is fixed relative to the head portion 30, and an elongate push rod 40 which extends through, and protrudes from the outer end of, the adaptor 34. The push rod 40 is mounted for linear, telescopic movement within the tubular adaptor 34 such that the outlet pressure of the pilot valve can be adjusted by substantially solely linear movement of the actuator.

## Description

This invention relates to a pressure control apparatus and method and, in particular, to a pressure control apparatus and method for use in a fluid supply system. The invention is intended particularly, but not exclusively, for use in a water supply system, although in the context of the invention, the term 'fluid' includes liquid and gas. The invention also extends to a pilot valve and actuator, and a method of operating a pilot valve and actuator for use in the pressure control apparatus and method.

It is well known that, in order to ensure that water is supplied on demand at a sufficiently high pressure, it is desirable to maintain a minimum water pressure at all points in a water supply system. However, the structure of mains water supply systems varies substantially from place to place, depending upon, among other things, the age of the system and the water requirements of an area. As a result, controlling the supply and pressure of mains water efficiently and effectively can become complicated and expensive.

One known system for controlling water pressure includes a plurality of pressure sensors located at critical points in a water supply system, such as those points which are the highest above sea level or furthest away from the source of supply in the area of interest. If the measured pressure at a particular point drops below the desired minimum pressure, the water pressure in the system is increased accordingly, such that the desired minimum pressure is maintained at all points in the system.

However, demand for water varies substantially throughout the day and considerable seasonal fluctuations also occur. As a result, the maximum pressure at one or more points in the system is often much higher than the desired minimum value. The maintenance of such a high pressure leads to a high level of water leakage, which is not only inefficient, but also contributes to the deterioration of pipes in the water distribution network.

In an attempt to overcome this problem, it is known to provide a regulating valve at each of the above-mentioned critical points in the system, such that a predetermined pressure level can be maintained at individual points in the system, without the need for adjustment of the water pressure throughout the system. In this case, a mechanical control device is provided in order to ensure that the predetermined pressure level is minimised. However, the main drawback with such a system is that once the valve and control means have been installed, it is difficult to adjust them, so that if the characteristics of the system change, for example due to an increase in demand, then the system cannot take this into account and the pressure level is not maintained at the optimum value.

EP-A-0574241 describes a water supply pressure control apparatus in which water pressure is regulated at a critical point in the system according to a difference between measured pressure at that point and a predetermined minimum pressure, as described above. However, in this case, water pressure is also measured at the outlet of the system, and this value is used to adjust the predetermined minimum pressure value.

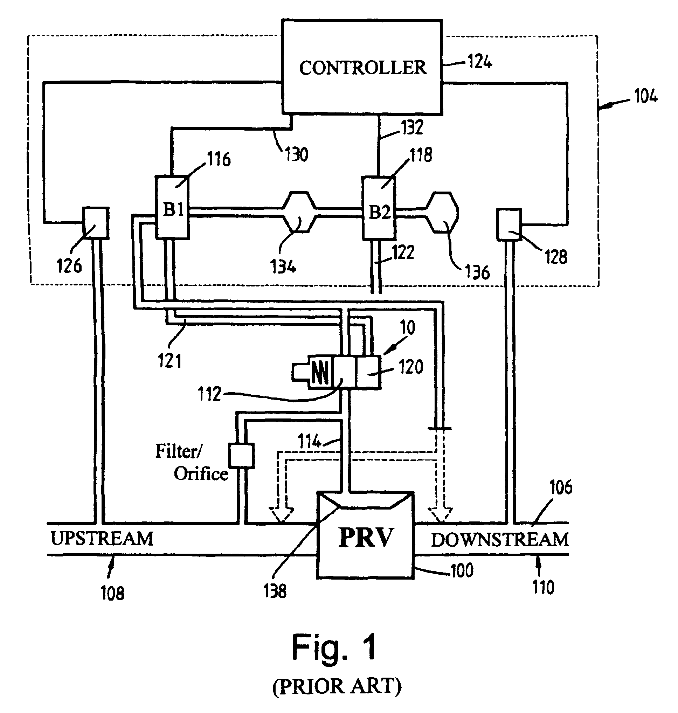

Another type of system is shown in Figure 1, which comprises a pressure reducing valve (PRV) 100, the outlet pressure of which is controlled by a dual diaphragm pilot valve 102 and an electric controller 104. The PRV 100 is located within a water supply pipe 106 and regulates the pressure differential between the upstream main 108 and the downstream main 110. The PRV 100 is connected to the control chamber 112 of the pilot valve 102 by means of an auxiliary flow pipe 114.

The controller 104 includes two solenoids 116, 118, one of which is connected to the bias chamber 120 of the pilot valve 102 via a pipe 121, and the other of which is connected to a vent 122. The controller 104 also includes a microprocessor-based control unit 124 having as its inputs the outputs of two pressure sensors 126, 128 which measure the water pressure in the water supply pipe 106 at points upstream and downstream respectively of the PRV 100. The control unit 124 has two outputs 130, 132 which are connected to the solenoids 116, 118. A pressure increase reservoir 134 and a pressure decrease reservoir 136 communicate with the solenoids 116, 118 respectively. The solenoids 116, 118 and the reservoirs 134, 136 together form a pressure generating module.

The water outlet pressure acting on the underside of the diaphragm 138 of the PRV 100 effectively 'follows' the pilot valve setting which is dictated by the pressure on the bias chamber. Thus, by controlling the pressure in the bias chamber, the outlet pressure of the PRV can be controlled.

In operation, the outlet pressure of the PRV is periodically measured by the sensor 128 and the pressure values are input to the control unit 124. The control unit 124 has a target outlet pressure value stored therein, which is updated as required to ensure that the optimum target output pressure is maintained. If the control unit detects a significant difference between the measured outlet pressure and the current target value, it sends a signal to the pressure generating module which then causes an increase or decrease in pressure on the bias chamber 120 accordingly.

If an increase in PRV outlet pressure is required, the solenoid 118 is pulsed for a short period so as to allow a small amount of water to pass from the pressure increase reservoir 134 into the pressure decrease reservoir 136. At the end of the pulse, the pressure decrease reservoir 136 is vented to the outside via vent 122. By removing this miniscule amount of water from the pressure increase reservoir 134, the pressure in the bias chamber 120 is decreased, thereby increasing the pressure in the control chamber 112 and, accordingly, the PRV outlet pressure.

If a decrease in PRV outlet pressure is required, the solenoid 116 is pulsed for a short period during which the pipe 121 is disconnected from the pressure increase reservoir 134 and the pressure increase reservoir 134 is connected directly to a high pressure source, thereby increasing the pressure therein. At the end of the pulse, the increased pressure in the reservoir 134 is "averaged" with the pressure in the pipe 121 leading to a higher pressure in the bias chamber 120. This, in turn, leads to a decreased pressure in the control chamber 112 and a corresponding decrease in PRV outlet pressure.

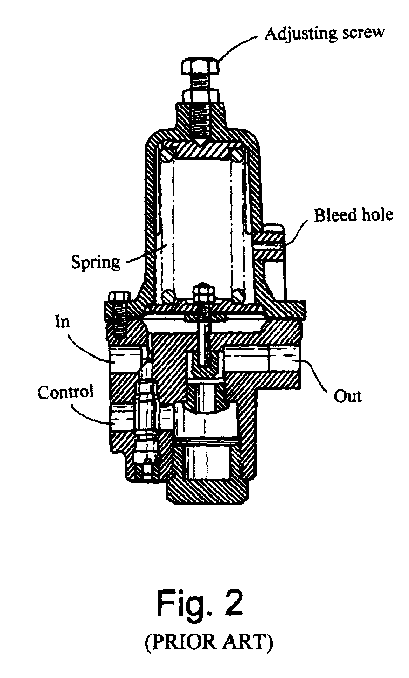

However, the two types of control apparatus described above require the use of a "dual chamber pilot valve" which is a pilot valve having a control chamber and a bias chamber for controlling the pressure in the control chamber. As shown in Figure 2, such a pilot valve includes pressure varying means in the control chamber 202, the pressure varying means consisting of a stopper 204 which is biased to the upper end of the control chamber by a spring 206. An external adjusting screw 208 communicates with the stopper 204. Rotation of the screw 208 so that it extends further into the control chamber 202 causes the stopper 204 to be pushed downward within the chamber and the spring to be compressed, thereby reducing the volume of the chamber and increasing the pressure therein, whereas rotation of the screw in the opposite direction releases the potential energy in the compressed spring which causes the stopper 204 to move upwardly in the control chamber 202. Thus, the maximum outlet pressure of the valve can be set according to requirements.

A bias chamber (not shown) is provided at the opposite end of the pilot valve such that it communicates with the control inlet 203, when used in conjunction with the fluid supply pressure control system described above. In order to adjust the outlet pressure of the valve, the pressure within the bias chamber is adjusted which produces an inverse pressure variation in the control chamber. Thus, an increase in bias chamber pressure causes a decrease in control pressure, and vice versa. The change in outlet pressure "follows" any change in control chamber pressure.

One disadvantage of this arrangement is that some manufacturers of pilot valves do not make a chamber for their pilot valves. As a result, if the control apparatus described above is to be installed in an existing system having such a pilot valve, then the whole pilot valve must be replaced. This is obviously undesirable due to the additional cost and installation time.

Furthermore, in many cases, the addition of a bias chamber to the pilot valve in a water supply control apparatus has lead to instability of operation, which may be caused by friction of the 'O' ring and stems in the bias chamber. Some dual chamber pilot valves having a bias chamber do not operate very well if the bias chamber is dry. This is because of the type of material of which the 'O' ring is formed. Thus, if the control apparatus is not fully commissioned at the same time as the bias chamber is added to an existing pilot valve, the valve will not operate effectively in a fixed outlet mode.

We have devised an arrangement which is intended to overcome the problems outlined above, and provides a pressure control apparatus and method which conveniently and efficiently controls the pressure throughout a fluid supply system so that fluid loss through leakage is substantially reduced, without the need for a dual chamber pilot valve.

In accordance with a first aspect of the present invention, there is provided a pilot valve comprising at least one chamber, pressure varying means in said at least one chamber for varying the outlet pressure of said valve; and an actuator for adjusting said pressure varying means, wherein said actuator is arranged, in use, to perform said adjustment of said pressure varying means by means of substantially solely linear movement of said actuator.

Thus, the bias chamber used with the pilot valves described above is replaced by an actuator which can be used to vary the outlet pressure of the valve as required. Because this is achieved by substantially solely linear movement of the actuator, as opposed to rotational movement for example, operation of the actuator can be simply, accurately and cost-effectively achieved by hydraulic or mechanical means.

In one embodiment, the pressure varying means may comprise a stopper which is mounted within the at least one chamber such that movement thereof causes a variation in volume of the chamber. The stopper is preferably biased towards the upper end of said chamber. The stopper is preferably biased by mechanical means, for example a spring, to a position at which the volume of the control chamber is at a maximum.

The control chamber preferably has an opening at one end, the internal circumference of the opening being threaded. The actuator preferably comprises an elongate, generally tubular, externally threaded adaptor for mounting the actuator on the pilot valve via the internally threaded opening.

The actuator preferably further comprises a generally hollow head portion, from which the adaptor extends, the adaptor being fixed relative to the head portion. The actuator may also comprise an elongate push rod which extends through and protrudes from one end of the adaptor, the push rod being mounted for linear movement within the tubular adaptor. One end of the push rod may be provided with a plunger having a flange which is located within the head portion of the actuator so as to prevent the push rod becoming detached from the actuator. The hollow area in the head portion is preferably divided by a semi-rigid or flexible diaphragm.

The actuator preferably comprises at least one nut mounted for rotation on the threaded adaptor. In a preferred embodiment the actuator comprises a plurality of nuts, more preferably three, mounted on the adaptor. More preferably, at least two of the nuts being mounted for rotation.

The actuator preferably comprises first adjustment means for setting the maximum and/or minimum outlet pressure of the pilot valve and second adjustment means for adjusting the pressure varying means while the valve is in use, wherein the first and second adjustment means are incorporated within a single, removable component. In a preferred embodiment, the second adjustment means are arranged, in use, to perform adjustment of the pressure varying means by means of substantially solely linear movement of the actuator.

In accordance with a second aspect of the present invention, there is provided a pilot valve comprising at least one chamber, pressure varying means in said at least one chamber for varying the outlet pressure of said valve; and an actuator for adjusting said pressure varying means, said actuator including first adjustment means for setting the minimum and/or maximum outlet pressure of said valve and second adjustment means for adjusting the pressure varying means while the valve is in use, wherein said first and second adjustment means are incorporated within a single, removable component.

Once again, by providing a single actuator for performing both types of adjustment, the need for a bias chamber is eliminated.

In one embodiment, the pressure varying means may comprise a stopper which is mounted within the at least one chamber such that movement thereof causes a variation in volume of the chamber. The stopper is preferably biased by mechanical means, for example a spring, to a position at which the volume of the control chamber is at a maximum.

The control chamber preferably has an opening at one end, the internal circumference of the opening being threaded. The actuator preferably comprises an elongate, generally tubular, externally threaded adaptor for mounting the actuator on the pilot valve via the internally threaded opening.

The actuator preferably further comprises a generally hollow head portion, from which the adaptor extends, the adaptor being fixed relative to the head portion. The actuator may also comprise an elongate push rod which extends through and protrudes from one end of the adaptor, the push rod being mounted for linear movement within the adaptor. One end of the push rod may be provided with a plunger having a flange which is located within the head portion of the actuator so as to prevent the push rod becoming detached from the actuator. The hollow area in the head portion is preferably divided by a semi-rigid or flexible diaphragm.

The actuator preferably comprises at least one nut mounted for rotation on the threaded adaptor. In a preferred embodiment the actuator comprises a plurality of nuts, more preferably three, mounted on the adaptor, at least two of the nuts being mounted for rotation.

The present invention also extends to a fluid supply control apparatus for use in conjunction with a pressure control valve of a fluid supply system, the apparatus including a pilot valve and actuator according to the first or second aspects of the present invention, the apparatus further comprising sensing means for measuring pressure at at least one point in the water supply system, means for comparing said measured pressure with a predetermined target pressure, and means for causing the actuator means of said pilot valve to adjust said pressure varying means in response to a difference between said measured pressure and said predetermined target pressure.

Also in accordance with the first aspect of the present invention, there is provided a method of operating a pilot valve having at least one chamber and pressure varying means for varying the outlet pressure of said valve, the method comprising the steps of providing actuator means for adjusting said pressure varying means, and operating said actuator means by substantially solely linear movement thereof.

Also in accordance with the second aspect of the present invention, there is provided a method of operating a pilot valve having at least one chamber and pressure varying means in said at least one chamber for varying the outlet pressure of said valve, the method comprising the steps of using first adjustment means for setting the minimum and/or maximum outlet pressure of said valve, and using second adjustment means for adjusting the pressure varying means in response to a difference between an actual outlet pressure and a reference pressure, and providing said first and second adjustment means in a single, removable component.

The actuator is preferably arranged, in use, to perform adjustment of the pressure varying means by means of substantially solely linear movement of the actuator. Most preferably, the second adjustment means are arranged, in use, to perform adjustment of the pressure varying means by means of substantially solely linear movement of the actuator.

The present invention also extends to a method of controlling the fluid pressure level at at least one point in a fluid supply system including a pressure control valve, the method including the method of operating a pilot valve according to the first or second aspects of the present invention, the method further comprising the steps of measuring pressure at at least one point in the water supply system, comparing said measured pressure with a predetermined target pressure, and means for causing the actuator means of said pilot valve to adjust said pressure varying means in response to a difference between said measured pressure and said predetermined target pressure.

The present invention also extends to an actuator for a pilot valve.

Embodiments of the present invention will now be described by way of example only, with reference to the accompanying drawings, in which:
Figure 1 is a schematic diagram of a fluid supply pressure control apparatus according to the prior art;
Figure 2 is cross-sectional view through a conventional pilot valve;
Figure 3 is a cross-sectional view through a pilot valve and actuator according to an embodiment of the present invention;
Figure 4 is a cross-sectional view of the actuator shown in Figure 3;
Figure 5 is a schematic diagram of a three-way ball valve for use with the pilot valve and actuator of Figure 3;
Figure 6 is a schematic diagram of a part of a fluid supply pressure control apparatus according to an embodiment of the present invention, showing the three-way ball valve of Figure 5 relative to the pilot valve and actuator of Figure 3; and
Figure 7 is a schematic diagram of a fluid supply pressure control apparatus according to an embodiment of the present invention including the pilot valve and actuator of Figure 3.

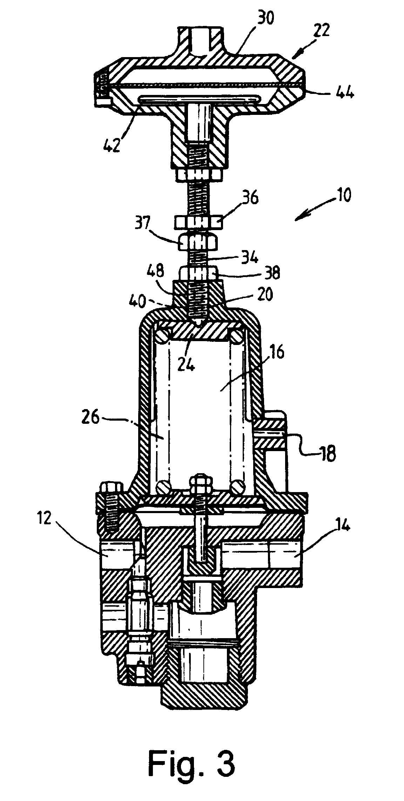

Referring to Figure 3 of the drawings, there is shown a pilot valve 10 having an inlet 12 and an outlet 14. The valve includes a control chamber 16 which is closed, except for a bleed hole 18. The pilot valve also includes pressure varying means in the control chamber 16 consisting of a stopper 24 which is biased to the upper end of the control chamber by a spring 26. Thus, the main features of the pilot valve are substantially identical to those of the prior art pilot valve shown in Figure 2 of the drawings. However, in this embodiment of the present invention, the opening 20 for receiving the adjusting screw of the prior art pilot valve shown in Figure 2 instead receives the actuator 22 in the present invention.

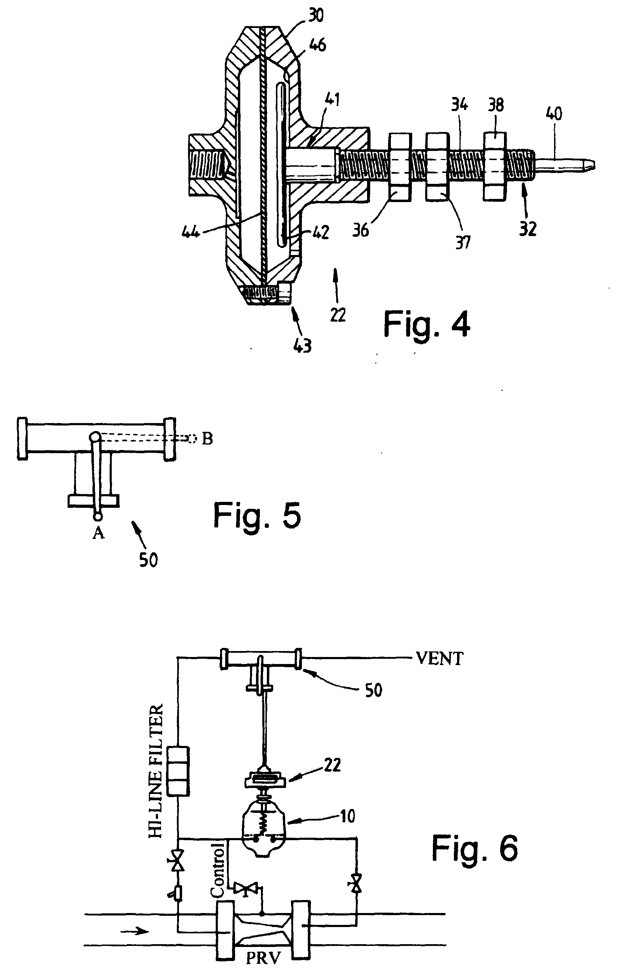

Referring in particular to Figure 4 of the drawings, the actuator 22 comprises a hollow head portion 30 having an opening from which extends an elongate stem portion 32. The stem portion 32 comprises a generally tubular threaded adaptor 34 which is fixed relative to the head portion 30. Three nuts 36, 37, 38 are mounted for rotation on the threaded screw member 34. The stem portion 32 also comprises an elongate push rod 40 which extends through, and protrudes from the outer end of, the threaded adaptor 34. The push rod 40 is mounted for linear, telescopic movement within the threaded adaptor 34. One end of the push rod 40 is provided with a brass plunger 41 having a generally disc-shaped flange or stop member 42 which is located within the head portion 30 and prevents the push rod 40 from becoming detached from the actuator. Also within the head portion 30, there is provided a semi-rigid or flexible diaphragm 44. Thus, the push rod 40 can slide within the threaded adaptor 34 in the direction of the head portion 30 until the flange or stop member 42 hits the diaphragm 44, and in the opposite direction until the flange or stop member 42 hits the inner wall 46 of the head portion 30. The head portion 30 is also provided with a capscrew 43.

Referring back to Figure 3 of the drawings, in use, the actuator 22 is mounted on the pilot valve 10 by screwing the threaded adaptor 34 into the adjustment screw opening 48, the adjustor screw having been removed. Initially, before the actuator is mounted on the pilot valve, the first and third nuts (lock nuts) 36, 38 are moved (by rotation thereof) along the threaded adaptor 34 of the actuator 22 until they are as close as possible to the central (retaining) nut 37. The actuator 22 can then be inserted into the adjustment screw opening 48 and screwed into the pilot valve 10. When the push rod 40 comes into contact initially with the stopper 24 in the control chamber 16 of the pilot valve 10 as the actuator is screwed into the pilot valve, it will initially be forced upwards into the hollow head portion 30 of the actuator 22. However, once the flange or stop member 42 of the plunger 41 hits the diaphragm 44 in the head portion 30, the push rod 40 is prevented from moving any further and instead exerts a downward force on the stopper 24 in the control chamber 16, causing it to move downwards and compress the spring 26, thereby reducing the volume of the control chamber 16.

When the valve is in use, the smaller the volume of the control chamber 16 of the pilot valve 10, the greater will be the outlet pressure of both the pilot valve and the pressure control valve which it is being used to control. Thus, the maximum outlet pressure can be set by screwing the actuator into the pilot valve and reducing the volume of the control chamber 16 to produce the required maximum pressure. Once set, the outer lock nut 38 is locked tight against the pilot valve (as shown in Figure 3) to maintain the required maximum pressure setting.

In order to set the required minimum pressure level, the actuator is rotated in the opposite direction relative to the pilot valve so as to retract the push rod 40. This allows the stopper 24 to move upwards within the control chamber 16 (due to the upward force exerted as the spring 26 is released), thereby increasing the volume of the control chamber 16 and decreasing the outlet pressure. Once the required minimum outlet pressure is achieved, the other lock nut 36 is locked tight against the head portion 30 of the actuator 22, as shown in Figure 3.

Because the above maximum and minimum pressure levels can be more accurately set while the valve is in operation, it is desirable to install a three-way ball valve 50 in the arrangement, as shown in Figures 5 and 6 of the drawings, in order to finely adjust the maximum and minimum pressure level settings. The two positions A and B (Figure 5) of the valve correspond to the actuator being in a fully pressurised state, i.e. maximum pressure (A) and a fully vented state, i.e. minimum pressure (B) respectively.

With the actuator fully pressurised, i.e. with the three-way valve in position A, the maximum pressure setting can be adjusted, in the manner described above. With the actuator fully vented, i.e. with the three-way ball valve in position B, the minimum pressure setting can be adjusted, in the manner described above. Thus, the maximum and minimum pressure levels have now been set. Although the only function of the three-way ball valve 50 is to set the maximum and minimum pressure levels, it is useful to leave it within the fluid supply pressure control apparatus after these levels have been set so that they can be adjusted if the characteristics of the supply system change. The valve should normally be left in position B, although it can be moved to position A to override the pressure control system and change the outlet pressure to the maximum level.

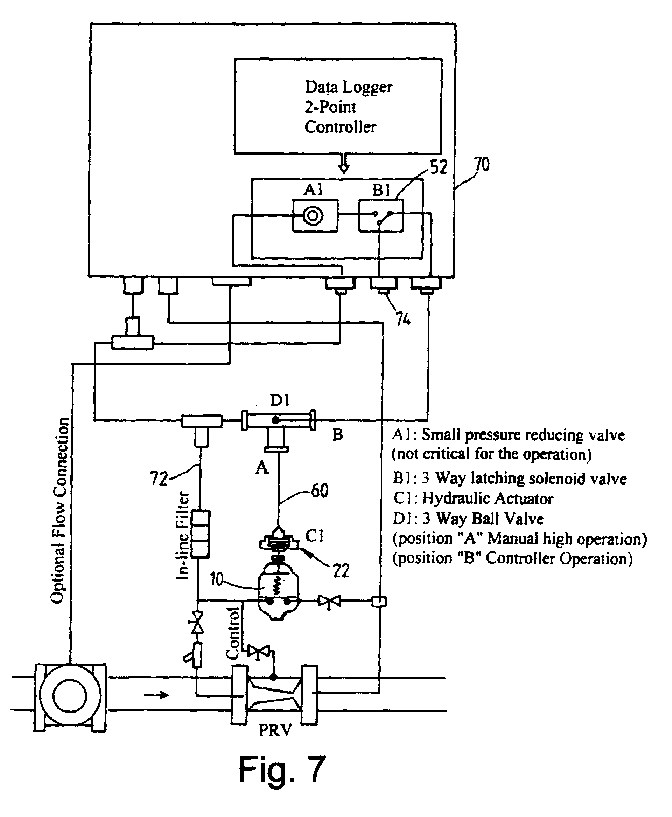

Referring to Figure 7 of the drawings, in a first embodiment of the fluid supply pressure control apparatus of the present invention, the microprocessor-based control unit 70 can be programmed to switch the pilot valve between the maximum and minimum pressure settings at particular times during the day so as to take into account variations in demand. If it is required to switch from minimum to maximum outlet pressure, the solenoid 52 is switched on, thereby connecting the control pipe 72 to the actuator pipe 60. As the pressure increases in the actuator pipe 60, a downward force is exerted on the head portion 30 of the actuator 22, and the push rod 40 is extended into the control chamber 16 and forces the stopper 24 downwards, thereby reducing the control chamber volume and increasing outlet pressure. When the maximum pressure level is reached, i.e. when the flange or stop member 42 hits the diaphragm 44 within the head portion 30 of the actuator 22, this position is maintained by keeping the solenoid switched on and maintaining the connection between the control pipe 72 and the actuator pipe 60.

When the minimum pressure setting is required, the solenoid is switched off, thereby disconnecting the actuator pipe 60 from the control pipe 72 and instead connecting it to a vent 74. The pressure in the actuator pipe 60 is released until the downward force exerted thereby is less than the upward force exerted by the compressed spring in the control chamber of the pilot valve. The stopper 24 is forced upward by the spring, thereby forcing the push rod 40 upward until the minimum pressure setting is reached and the control chamber volume is at its set maximum, thereby minimising the pilot valve and PRV outlet pressure levels accordingly.

Thus, adjustment of the outlet pressure is achieved by exerting a solely linear force on the head portion 30 of the actuator 22 so as to extend the push rod 40 further into the control chamber 16, thereby reducing its volume and increasing the outlet pressure, or retracting the push rod 40 further out of the control chamber 16 so as to increase its volume and decrease the outlet pressure.

Another embodiment of a fluid supply pressure control apparatus according to the present invention is obtained if the dual diaphragm pilot valve 102 of the system shown in Figure 1 is replaced by the pilot valve and actuator of Figure 3, with the pipe 121 being connected to the actuator. In this case, the outlet pressure of the PRV can be adjusted to any level between the set maximum and minimum pressure levels in response to a detected difference between the pressure level measured at at least one point in the fluid supply system and a predetermined target level. The pressure level at at least one point in the system is measured by means of a pressure sensor, the output of which forms an input to the microprocessor-based control unit 124. The predetermined target pressure level is stored in the control unit 124. When the difference between the measured pressure and the target pressure exceeds a predetermined threshold, the outlet pressure of the pilot valve is adjusted accordingly.

If it is required to increase the outlet pressure, the solenoid 116 is pulsed for a short period during which the pipe 121 is disconnected from the pressure increase reservoir 134 and the pressure increase reservoir 134 is connected directly to a high pressure source, thereby increasing the pressure therein. At the end of the pulse, the increased pressure in the reservoir 134 causes an increased pressure in the actuator pipe 121. As a result, a downward force is exerted on the actuator, causing the stopper in the control chamber of the pilot valve to move downwards and reduce the control chamber volume. This, in turn, leads to an increased pressure in the control chamber 112 and a corresponding increase in PRV outlet pressure.

If a decrease in PRV outlet pressure is required, the solenoid 118 is pulsed for a short period so as to allow a small amount of water to pass from the pressure increase reservoir 134 into the pressure decrease reservoir 136. At the end of the pulse, the pressure decrease reservoir 136 is vented to the outside via vent 122. By removing this miniscule amount of water from the pressure increase reservoir 134, the pressure in the actuator pipe 121 is decreased so that it exerts a smaller downward force on the actuator than the upward force exerted by the compressed spring in the control chamber of the pilot valve on the stopper, and the stopper rises to increase the volume of the control chamber. Thus, the outlet pressure of the pilot valve and, therefore, that of the PRV is decreased.

The present invention has been described above purely by way of example, and modifications can be made within the spirit of the invention. The invention also consists in any individual features described or implicit herein or shown or implicit in the drawings or any combination of such features or any generalisation of any such features or combination.

## Claims

1. A pilot valve comprising at least one chamber, pressure varying means in said at least one chamber for varying the outlet pressure of said valve; and an actuator for adjusting said pressure varying means, said actuator including first adjustment means for setting the minimum and/or maximum outlet pressure of said valve and second adjustment means for adjusting the pressure varying means while the valve is in use, wherein said first and second adjustment means are incorporated within a single, removable component.

2. A pilot valve comprising at least one chamber, pressure varying means in said at least one chamber for varying the outlet pressure of said valve; and an actuator for adjusting said pressure varying means, wherein said actuator is arranged, in use, to perform said adjustment of said pressure varying means by means of substantially solely linear movement of said actuator.

3. A pilot valve and actuator according to either of claims 1 or 2, wherein said actuator is mounted on said pilot valve instead of an adjustment screw.

4. A pilot valve and actuator according to any preceding claim, wherein said pressure varying means comprises a stopper mounted within said at least one chamber such that linear movement thereof causes a variation in volume of said chamber.

5. A pilot valve and actuator according to claim 4, wherein said stopper is biased by mechanical means to a position at which the volume of said control chamber is at a maximum.

6. A pilot valve and actuator according to any one of claims 1 to 5, wherein said control chamber has an opening at one end, the internal circumference of said opening being threaded.

7. An actuator for a pilot valve comprising at least one chamber and pressure varying means in said at least one chamber for varying the outlet pressure of said valve, the actuator comprising means for adjusting said pressure varying means by substantially solely linear movement of said actuator.

8. An actuator for a pilot valve comprising at least one chamber and pressure varying means in said at least one chamber for varying the outlet pressure of the valve, the actuator consisting of a single component incorporating first adjustment means for setting, when in use, the maximum and/or minimum outlet pressure of a pilot valve, and second adjustment means for adjusting, when in use, the pressure varying means of a pilot valve.

9. A pilot valve and actuator according to claim 6 or an actuator according to either of claims 7 or 8, wherein said actuator comprises an elongate generally tubular, externally threaded adaptor for mounting said actuator on said pilot valve via said threaded opening.

10. An actuator or a pilot valve and actuator according to claim 9, wherein said actuator further comprises a generally hollow head portion, from which said adaptor extends, said adaptor being fixed relative to said head portion.

11. An actuator or a pilot valve and actuator according to claim 10, wherein said actuator further comprises an elongate push rod which extends through and protrudes from one end of said adaptor, said push rod being mounted for linear movement within the tubular adaptor.

12. An actuator or a pilot valve and actuator according to claim 11, wherein one end of said push rod is provided with a plunger having a flange located within said head portion of said actuator so as to prevent said push rod from becoming detached from said actuator, the opposite end of said push rod being in communication with said pressure varying means.

13. An actuator or a pilot valve and actuator according to claim 12, wherein the hollow area in said head portion is divided by a semi-rigid or flexible diaphragm.

14. An actuator or a pilot valve and actuator according to claim 9, wherein said actuator comprises at least one nut mounted for rotation on said threaded adaptor.

15. An actuator or a pilot valve and actuator according to claim 14, wherein said actuator comprises three nuts mounted on said adaptor.

16. An actuator or a pilot valve and actuator according to claim 15, wherein the central nut is fixed when the valve is in use.

17. An actuator or a pilot valve and actuator according to claim 16, wherein the other two nuts can be used to set and mechanically lock the maximum and minimum outlet pressure respectively of the valve.

18. An actuator or a pilot valve and actuator according to any one of claims 1, 3 to 6 and 8 to 17, when not dependent on claims 2 or 7, wherein said actuator is arranged, in use, to perform adjustment of said pressure varying means by means of substantially solely linear movement of said actuator.

19. An actuator or a pilot valve and actuator according to claim 18, wherein said second adjustment means are arranged, in use, to perform adjustment of said pressure varying means by means of substantially solely linear movement of said actuator.

20. A pilot valve and actuator according to any of claims 2 to 6 and 9 to 17 when not dependent on claims 1, 7 or 8, wherein said actuator comprises first adjustment means for setting the maximum and/or minimum outlet pressure of the pilot valve and second adjustment means for adjusting the pressure varying means while the valve is in use, wherein said first and second adjustment means are incorporated within a single, removable component.

21. An actuator or a pilot valve and actuator according to any preceding claim, wherein said actuator is hydraulically controlled.

22. An actuator according to any one of claims 8 to 21, when not dependent on claims 1, 2 or 7, consisting of a single component incorporating first adjustment means for setting, when in use, the maximum and/or minimum outlet pressure of a pilot valve, and second adjustment means for adjusting, when in use, the pressure varying means of a pilot valve.

23. A fluid supply control apparatus for use in conjunction with a pressure control valve of a fluid supply system, the apparatus including an actuator or a pilot valve and actuator according to any one of the preceding claims.

24. A method of operating a pilot valve having at least one chamber and pressure varying means for varying the outlet pressure of said valve, the method comprising the steps of providing an actuator for adjusting said pressure varying means, and operating said actuator by substantially solely linear movement thereof.

25. A method of operating a pilot valve having at least one chamber and pressure varying means in said at least one chamber for varying the outlet pressure of said valve, the method comprising the steps of using first adjustment means for setting the minimum and/or maximum outlet pressure of said valve, and using second adjustment means for adjusting the pressure varying means in response to a difference between an actual outlet pressure and a reference pressure, and providing said first and second adjustment means in a single, removable component.

26. A method of controlling a fluid pressure level at at least one point in a fluid supply system including a pressure control valve, the method including the method of operating a pilot valve according to either of claims 24 or 25, the method further comprising the steps of measuring pressure at at least one point in the water supply system, comparing said measured pressure with a predetermined target pressure, and means for causing the actuator of said pilot valve to adjust said pressure varying means in response to a difference between said measured pressure and said predetermined target pressure.
